# FASCICULE DE BREVET EUROPEEN

(11) **EP 1 228 001 B1**
(45) Date de publication et mention de la délivrance du brevet: **15.10.2003**
(21) Numéro de dépôt: 00974639.7
(22) Date de dépôt: 02.11.2000
(51) Int. Cl.: C01B 37/00, C01B 37/02, C01B 33/38

(54) **MATERIAU MESOSTRUCTURE INTEGRANT DES PARTICULES DE DIMENSION NANOMETRIQUE**
MATERIAL MIT MESOSTRUKTUR TEILCHEN IM NANOMETER-BEREICH ENTHALTEND
MESOSTRUCTURED MATERIAL INCORPORATING PARTICLES OF NANOMETRIC DIMENSIONS

(30) Priorité: 02.11.1999 FR 9913678
(43) Date de publication de la demande: 07.08.2002
(73) Titulaire: RHODIA CHIMIE, 92512 Boulogne Billancourt Cedex (FR)
(72) Inventeur: CHANE-CHING, Jean-Yves, F-95600 Eaubonne (FR)
(74) Mandataire: Jacobson, Claude
(86) Numéro de dépôt international: FR0003060
(87) Numéro de publication internationale: WO01032558

(56) Documents cités:
- JIN-SEUNG JUNG ET AL: "Preparation and characterization of Ni nanoparticles in an MCM mesoporous material" MATERIALS RESEARCH BULLETIN, 1 JULY 1999, ELSEVIER, USA, vol. 34, no. 9, pages 1353-1360, XP000921196 ISSN: 0025-5408
- HUIJUAN ZHOU ET AL: "Synthesis and structure of indium oxide nanoparticles dispersed within pores of mesoporous silica" MATERIALS RESEARCH BULLETIN, APRIL 1999, ELSEVIER, USA, vol. 34, no. 6, pages 845-849, XP000921101 ISSN: 0025-5408
- HIRAI T ET AL: "Size-selective incorporation of CdS nanoparticles into mesoporous silica" JOURNAL OF PHYSICAL CHEMISTRY B, 27 MAY 1999, ACS, USA, vol. 103, no. 21, pages 4228-4230, XP000921207 ISSN: 1089-5647
- KOEHN R ET AL: "Iron (III) oxide within mesoporous MCM-48 silica phases: synthesis and characterization" PROCEEDINGS OF THE 1998 MRS FALL MEETING - SYMPOSIUM ON SOLID-STATE CHEMISTRY OF INORGANIC MATERIALS II;BOSTON, MA, USA NOV 30-DEC 4 1998, vol. 547, 30 novembre 1998 (1998-11-30), pages 81-86, XP000921383 Mater Res Soc Symp Proc;Materials Research Society Symposium - Proceedings 1999 Materials Research Society, Warrendale, PA, USA
- SASAKI MAKOTO ET AL: "Novel templating fabrication of nano-structured Pt clusters and wires in the ordered cylindrical mesopores of FSM-16 and their unique properties in catalysis and magnetism" PROCEEDINGS OF THE 1997 INTERNATIONAL SYMPOSIUM ON ZEOLITES AND MICROPOROUS CRYSTALS, ZMPC;TOKYO, JPN AUG 24-27 1997, vol. 21, no. 4-6, 24 août 1997 (1997-08-24), pages 597-606, XP002141175 Microporous Mesoporous Mater;Microporous and Mesoporous Materials May 1998 Elsevier Sci B.V., Amsterdam, Netherlands
- DATABASE WPI Section Ch, Week 199951 Derwent Publications Ltd., London, GB; Class E32, AN 1999-591552 XP002141177 & CN 1 225 898 A (SOLID-STATE INST CHINESE ACAD SCI), 18 août 1999 (1999-08-18)
- WEIPING CAI ET AL: "Luminescence of aggregated and dispersed nanosized cerium doped silica particles" JOURNAL OF MATERIALS SCIENCE LETTERS, 15 NOV. 1999, KLUWER ACADEMIC PUBLISHERS, USA, vol. 18, no. 22, pages 1849-1851, XP000869127 ISSN: 0261-8028
- WHILTON N T ET AL: "Organized functionalization of mesoporous silica supports using prefabricated metal-polymer modules" ADVANCED MATERIALS, 2 AUG. 1999, VCH VERLAGSGESELLSCHAFT, GERMANY, vol. 11, no. 12, pages 1014-1018, XP002141176 ISSN: 0935-9648
- M WARK ET AL.: "Tailored synthesis, characterization and properties of ZnO, CdO and SnO2 nano particles in zeolitic hosts" ZEOLITES., vol. 97, 1995, pages 205-212, XP000921298 ELSEVIER SCIENCE PUBLISHING., US ISSN: 0144-2449

## Description

La présente invention concerne un matériau mésoporeux ordonné ou mésostructuré, et thermiquement stable.

Au sens strict du terme, les matériaux dits mésoporeux sont des solides présentant, au sein de leur structure, des pores possédant une taille intermédiaire entre celle des micropores des matériaux de type zéolites et celle des pores macroscopiques.

Plus précisément, l'expression "matériau mésoporeux " désigne à l'origine un matériau qui comporte spécifiquement des pores de diamètre moyen compris entre 2 et 50 nm, désignés par le terme de "mésopores". Typiquement, ces composés sont des composés de type silices amorphes ou paracristallines dans lesquelles les pores sont généralement distribués de façon aléatoire, avec une distribution très large de la taille des pores.

En ce qui concerne la description de tels matériaux, on pourra notamment se reporter à *Science,* vol. 220, pp. 365-371 (1983) ou encore au *Journal of Chemical Society, Faraday Transactions,* 1, vol. 81, pp. 545-548 (1985).

D'autre part, les matériaux dits "structurés" sont quant à eux des matériaux présentant une structure organisée, et caractérisés de façon plus précise par le fait qu'ils présentent au moins un pic de diffusion dans un diagramme de diffusion de rayonnement de type diffusion par des rayons X ou par des neutrons. De tels diagrammes de diffusion ainsi que leur mode d'obtention sont notamment décrits dans *Small Angle X-Rays Scattering* (Glatter et Kratky - Academic Press London- 1982).

Le pic de diffusion observé dans ce type de diagramme peut être associé à une distance de répétition caractéristique du matériau considéré, qui sera désignée dans la suite de la présente description par le terme de "période spatiale de répétition" du système structuré.

Sur la base de ces définitions, on entend par "matériau mésostructuré" un matériau structuré possédant une période spatiale de répétition comprise entre 2 et 50 nm.

Les matériaux mésoporeux ordonnés constituent quant à eux un cas particulier de matériaux mésostructurés. Il s'agit en fait de matériaux mésoporeux qui présentent un agencement spatial organisé des mésopores présents dans leur structure, et qui de ce fait possèdent effectivement une période spatiale de répétition associée à l'apparition d'un pic dans un diagramme de diffusion.

La famille des matériaux de dénomination générique "M41S", notamment décrite par Kresge et al. dans *Nature,* vol. 359, pp. 710-712 (1992) ou par Q. Huo et al. dans *Nature,* vol. 368, pp. 317-321 (1994) constitue l'exemple le plus connu de matériaux mésostructurés et mésoporeux ordonnés : il s'agit de silices ou d'aluminosilicates dont la structure est formée de canaux bi- ou tridimensionnels ordonnés selon un agencement hexagonal (MCM-41) ou cubique (MCM-48), ou encore qui possèdent une structure vésiculaire ou lamellaire (MCM-50).

Il est à noter que, bien qu'ils soient constitués d'une structure présentant des canaux et non des mésopores, les composés dits MCM-41 et MCM-48 sont généralement décrits dans la littérature comme étant des matériaux mésoporeux ordonnés. Fengxi Chen et al., par exemple, décrivent en effet ,dans Chemicals Materials, vol. 9, No 12, p. 2685 (1997), les canaux présents au sein de ces structures comme des "mésopores bi- ou tridimensionnels".

En revanche, les matériaux de structure vésiculaire ou lamellaire de type MCM-50, ne sauraient quant à eux être assimilés à des structures mésoporeuses, dans la mesure où leurs parties poreuses ne peuvent être considérées comme des mésopores. Elles seront donc désignées uniquement par le terme de matériaux mésostructurés dans la suite de la description.

Les matériaux mésostructurés et mésoporeux ordonnés du type des M41S sont généralement obtenus par un procédé dit de "texturation par cristaux liquides", usuellement désigné par les initiales "LCT" correspondant à l'expression anglaise *"Liquid Crystal Templating"*. Ce procédé "LCT" consiste à former une matrice minérale telle qu'un gel de silice ou d'aluminosilicate en présence de composés amphiphiles de type tensioactifs.

Le terme "texturation par cristaux liquide" vient du fait qu'on peut considérer schématiquement que la structure de cristal liquide initialement adoptée par les molécules de tensioactif imprime à la matrice minérale sa forme finale.

Ainsi, on peut considérer qu'au sein de la structure cristal liquide, les précurseurs minéraux se localisent sur les parties hydrophiles des composés amphiphiles avant de se condenser entre eux, ce qui confère à la matrice minérale obtenue *in fine* un agencement spatial calqué sur celui du cristal liquide. Par élimination du tensioactif, notamment par traitement thermique ou entraînement par un solvant, on obtient un matériau mésostructuré ou mésoporeux ordonné, qui constitue l'empreinte de la structure cristal liquide initiale.

Beck et al. dans le *Journal of American Chemical Society*, vol. 114, p. 10834 (1992) expliquent ainsi la structure en nid d'abeille de MCM-41 par l'organisation initiale des molécules de tensioactif sous forme d'une phase cristal liquide de type hexagonale.

Il semble cependant, comme l'ont montré Davis et al. dans *Microporous Materials*, vol. 2, p. 27 (1993), que le mécanisme mis en jeu est un peu plus complexe. Il passe en fait dans un premier temps par la formation d'espèces composites constituées de micelles recouvertes de précurseurs minéraux qui s'organisent, dans une seconde étape, en un réseau hexagonal, cubique ou lamellaire. Il n'en reste pas moins cependant que l'agencement final de la matrice minérale obtenue est bien régi par la forme initiale des micelles formées par les molécules amphiphiles utilisées, ce qui justifie la dénomination "LCT" et le fait qu'on emploie généralement le terme "agent texturant" pour désigner les composés amphiphiles de type tensioactif mis en oeuvre lors de ce processus.

Compte tenu de leur haute surface spécifique et de leur structure particulière, les matériaux mésostructurés ou mésoporeux ordonnés ainsi obtenus présentent un très grand intérêt, notamment dans le domaine de la catalyse, de la chimie d'absorption ou de la séparation membranaire.

Néanmoins, de façon à les adapter au mieux à ces différentes applications, on a rapidement cherché à les modifier de façon à accroître leur stabilité, notamment leur stabilité thermique, et à améliorer leur efficacité dans ces différents domaines.

En jouant sur la nature du système texturant mis en oeuvre, on a observé une modification de la structure de la matrice minérale obtenue. Les travaux de Tanev et al., entre autres, ont par exemple mis en évidence le fait que la taille des pores dépend de la longueur de la chaîne hydrophobe des composés amphiphiles utilisés (*Science*, vol. 267, pp. 865-867, 1995). Mais ils ont surtout montré que le passage d'un tensioactif ionique à un agent texturant non chargé mène à un processus dit de "texturation neutre". Ce processus induit une augmentation notable de l'épaisseur des parois des mésostructures, ce qui conduit notamment à une amélioration de la stabilité du composé obtenu.

Cependant, de façon à obtenir des matériaux mésostructurés réellement intéressants, la maîtrise de ces seuls paramètres structurels n'est pas suffisante.

En effet, le développement industriel des matériaux mésostructurés est actuellement conditionné par d'autres impératifs concernant la constitution même de la matrice minérale, et notamment son degré de cristallinité et sa nature chimique.

Or, les matériaux mésostructurés sont généralement constitués d'une matrice minérale amorphe ou paracristalline, de type silice, aluminosilicate ou alumine, et une amélioration du degré de cristallinité de ces composés n'a pas été décrite. De plus, les tentatives effectuées pour obtenir des matériaux mésoporeux à base de constituants différents, comme les sels de niobium ne mènent *a priori* qu'à des composés de faible stabilité, ce qui interdit leur utilisation à l'échelle industrielle.

Une structure mésoporeuse ordonnée suffisamment stable ne peut donc être actuellement obtenue qu'en mettant en oeuvre un nombre restreint de composés chimiques, de type silice et/ou alumine. De ce fait, l'intégration dans une structure mésoporeuse ordonnée de composés chimiques capables d'induire des propriétés spécifiques ne peut pas être réalisée dans bien des cas.

La présente invention fournit une solution à ce problème technique.

La présente invention a en effet pour but de fournir des matériaux mésostructurés, ou possédant une structure mésoporeuse ordonnée, ce qui leur confère notamment une surface spécifique élevée.

D'autre part, un deuxième but de l'invention est de fournir des matériaux mésostructurés qui présentent, en plus d'un ordre au niveau de l'agencement de leurs pores, un degré de cristallinité propre des parois de la structure important.

Enfin, un autre but de l'invention est d'intégrer, au sein de la matrice d'une structure mésoporeuse, des composés chimiques possédants des propriétés intrinsèques particulières, capables d'induire des propriétés spécifiques, mais sans pour autant affecter la stabilité de la structure obtenue.

La présente invention a plus précisément pour objet un matériau mésoporeux ordonné, ou mésostructuré, thermiquement stable, comprenant une phase minérale au sein de laquelle sont dispersées des particules de dimension nanométrique au moins partiellement cristallines, le taux de cristallinité global dudit matériau mésostructuré ou mésoporeux ordonné étant au moins de 10% en volume.

Avantageusement, les matériaux mésoporeux ordonnés ou mésostructurés de la présente invention sont des solides présentant au moins localement une ou plusieurs mésostructure(s) choisie(s) parmi :
- les mésostructures mésoporeuses de symétrie hexagonale tridimensionnelle P63/mmc, de symétrie hexagonale bidimensionnelle P6mm, de symétrie cubique tridimensionnelle la3d, lm3m ou Pn3m ; ou
- les mésostructures de type vésiculaires ou lamellaires.

En ce qui concerne la définition de ces différentes symétries et structures, on pourra se référer par exemple à *Chemical Materials*, vol. 9, No 12, pp. 2685-2686 (1997) ou encore à *Nature*, vol. 398, pp.223-226 (1999).

Selon l'invention, un matériau mésoporeux ordonné ou mésostructuré est considéré comme thermiquement stable dans la mesure où sa mésostructure est conservée jusqu'à une température d'au moins 500°C et pouvant aller jusqu'à 700°C, voire jusqu'à 800°C et dans certains cas jusqu'à une température supérieure à 800°C.

A ce sujet, il est à noter que l'exposition de structures mésostructurées ou mésoporeuses ordonnées à des températures élevées mène généralement à une fragilisation de ces matériaux, notamment du fait de la diminution de l'épaisseur des parois de leur mésostructure, ce qui peut mener à un effondrement de ladite structure.

La présente invention permet, de façon surprenante de fournir des composés très stables en température.

Par "particules de dimension nanométrique", on entend, au sens de la présente invention, des particules de morphologie sphérique ou anisotrope dont au moins 50% de la population possède un diamètre moyen compris entre 1 et 10 nm, avec une répartition granulométrique de ces particules de préférence monodisperse.

De façon particulière, le terme "particules de dimension nanométrique" peut également désigner selon l'invention des particules fortement anisotropiques, de type bâtonnets, à la condition que, pour au moins 50% de la population de ces particules, le diamètre transversal moyen est compris entre 1 et 10 nm et la longueur ne dépasse pas 100 nm, avec une répartition granulométrique de ces particules de préférence monodisperse.

Les particules de dimension nanométrique mises en oeuvre selon la présente invention sont des particules au moins partiellement cristallines, c'est-à-dire qu'elles présentent un taux de cristallinité allant de 30 à 100 % en volume. L'introduction de ces particules partiellement cristallisées au sein de la phase minérale permet de conférer aux matériaux mésostructurés de l'invention, en plus d'un agencement ordonné de leur réseau de pores, un taux de cristallinité global au moins égal à 10% en volume, et préférentiellement supérieur à 30% en volume.

Par "taux de cristallinité global" au sens de l'invention, on entend le taux de cristallinité des parois de la structure, qui prend globalement en compte à la fois la cristallinité éventuelle de la phase minérale liante et la cristallinité des particules de dimension nanométrique incluses dans cette phase liante. Il est donc à noter que la notion de cristallinité du matériau au sens de l'invention concerne spécifiquement la cristallinité propre des parois du matériau est qu'elle est de ce fait notamment à distinguer de l'ordre présenté à un niveau plus macroscopique par le réseau de pores de la structure mésoporeuse.

De façon préférentielle, les particules de dimension nanométrique intégrées dans la phase minérale liante des matériaux de l'invention sont des particules à base d'un ou de plusieurs oxyde(s), hydroxyde(s) ou oxyhydroxyde(s) d'un métal ou de métaux choisi(s) parmi le cérium, le zirconium, le titane, l'aluminium, l'yttrium, les lanthanides ou les métaux de transitions tels que par exemple le fer, le chrome, le vanadium, le manganèse, le cobalt, le nickel, le cuivre, ou le zinc.

Par lanthanide, on entend un métal dont le numéro atomique est compris, de façon inclusive, entre 57 (lanthane) et 71 (lutécium).

Avantageusement, ces particules de dimension nanométrique sont des particules à base d'au moins un composé choisi parmi l'oxyde de cérium CeO₂, l'oxyde de zirconium ZrO₂, l'oxyde de titane TiO₂, l'alumine Al₂O₃, l'oxyhydroxyde d'aluminium AlO(OH), l'oxyde de lanthane La₂O₃, ou l'oxyde de fer Fe₃O₄.

Ces particules de dimension nanométriques sont bien connues de l'homme du métier et leurs modes d'obtention ont été largement décrites dans l'art antérieur. Ainsi, des particules d'oxyde de cérium utiles selon l'invention peuvent être par exemple des particules du type de celles observées par exemple dans les dispersions colloïdales (sols de cérium) décrits notamment dans les demandes de brevets FR 2 416 867, EP 0 206 906 ou EP 208 580. En ce qui conceme les particules d'oxyde de zircone, on pourra notamment se référer *au Journal of Gel Science Technology*, vol. 1, p. 223 (1994). On peut également citer l'article de Chemical Materials, vol. 10, pp. 3217-3223 (1998), en ce qui concerne les particules nanométriques d'oxyde de titane.

La phase minérale du matériau mésostructuré de la présente invention intégrant les particules de dimension nanométriques définies précédemment constitue quant à elle une phase minérale, amorphe à partiellement cristalline, constituée de façon préférentielle de silice, d'alumine, ou de silicate d'un ou de plusieurs métaux.

Quelle que soit sa nature exacte, il est à souligner que, dans le matériau de l'invention, la phase minérale joue spécifiquement un rôle de liant entre les particules de dimension nanométrique. En d'autres termes, les particules de dimensions nanométriques présentes dans le matériau sont spécifiquement localisées au sein de cette phase liante, c'est à dire au sein des parois de la structure mésoporeuse. En particulier, il est donc à souligner que les matériaux selon l'invention sont notamment à distinguer de matériaux mésoporeux incluant des particules dans l'espace interne de leurs pores.

De plus, il est à noter que, de façon préférentielle, la nature chimique de cette phase minérale liante est différente de celle des particules qu'elle contient.

En outre, on préfère souvent qu'une partie au moins des particules intégrées dans la phase minérale liante soit en contact avec les parties poreuses constituant l'espace interne du matériau. En d'autres termes, le matériau selon l'invention est préférablement un matériau où la phase minérale joue effectivement un rôle de liant inter-particulaire, mais n'englobe pas totalement les particules de dimension nanométrique qu'elle contient.

La présence au sein de la matrice minérale de ces particules au moins partiellement cristallines présente le double avantage d'améliorer d'une part le degré de cristallinité globale du matériau et de conférer d'autre part au matériau des propriétés spécifiques, notamment des propriétés mécaniques, catalytiques, photocatalytiques, des propriétés d'adsorption, de conduction thermique ou encore de conduction électronique, dues à la présence de l'oxyde, de l'hydroxyde ou de l'oxyhydroxyde métallique.

Il est important de considérer le rôle primordial de consolidation inter-particulaire de la phase minérale. En effet, de façon à favoriser la formation d'une structure où les particules sont partiellement mises à nu, on serait tenté *a priori* de diminuer fortement le rapport phase minérale liante/particules. Or, il apparaît que la stabilité de la structure n'est généralement pas assurée lorsque le rapport molaire matrice minérale/particules se situe en deçà de la proportion de 20:80.

De ce fait, le rapport molaire matrice minérale/particule de dimension nanométrique est avantageusement compris dans les matériaux selon l'invention entre 20:80 et 99,5:0,5 , et avantageusement entre 40:60 et 95:5. De façon encore plus préférée, ce rapport molaire est compris entre 40:60 et 92:8.

Selon l'invention, l'épaisseur globale des parois de la structure mésoporeuse, qui intègrent les particules de dimension nanométrique, est préférentiellement comprise entre 3 et 12 nm.

D'autre part, les matériaux de l'invention présentent une surface spécifique élevée, comprise préférentiellement entre 400 et 1500 m²/g.

Dans le cas d'une structure mésoporeuse ordonnée, le diamètre des pores est généralement compris entre 2 et 8 nm. Toutefois, ce diamètre peut être encore augmenté, notamment par l'emploi de solvants, par des techniques connues de l'état de la technique

Selon un second aspect, l'invention a également pour objet un procédé de préparation d'un matériau mésoporeux organisé partiellement cristallisé comprenant une phase minérale au sein de laquelle sont dispersées des particules de dimension nanométrique. Ce procédé est caractérisé en ce qu'il comprend les étapes consistant à :
(1) former un milieu initial comprenant un agent texturant ;
(2) ajouter audit milieu une dispersion colloïdale de particules de dimension nanométrique ;
(3) former, par ajout d'un précurseur minéral dans le milieu, une phase minérale présentant une mésostructure organisée, ladite phase minérale intégrant, au sein des parois de cette structure, lesdites particules de dimension nanométrique; et
(4) éliminer l'agent structurant.

Le milieu initial formé lors de l'étape (1) est préférentiellement un milieu aqueux, mais il peut également s'agir d'un milieu hydro-alcoolique, et de préférence dans ce cas d'un milieu eau/éthanol, ou encore d'un milieu non aqueux, et, le cas échéant, avantageusement d'un milieu chloroforme ou tétrahydrofuranne.

Rappelons que, l'agent texturant présent dans ce milieu initial est un composé amphiphile de type tensioactif, notamment un copolymère. La caractéristique essentielle de ce composé est qu'il est susceptible de former des micelles dans le milieu réactionnel, de façon à mener, par mise en oeuvre du mécanisme de texturation "LCT" défini précédemment, à la formation, lors de l'étape (3) ultérieure, d'une matrice minérale possédant une mésostructure organisée.

Cependant, de façon à mettre en oeuvre un processus de texturation neutre qui présente l'avantage de conduire, comme il a été souligné précédemment, à une augmentation de l'épaisseur des parois obtenues et donc à une amélioration de la stabilité de la structure finale, l'agent texturant utilisé dans le procédé selon l'invention est de façon préférentielle un composé non chargé dans les conditions de mise en oeuvre du procédé.

De façon préférentielle mais non limitative, le pH du milieu initial est inférieur à 4.

Quoique tous les composés amphiphiles non chargés dans ces conditions de pH puissent être mis en oeuvre comme agents texturants dans le procédé de l'invention, on préfère utiliser certains types particuliers de composés. A titre indicatif et non limitatif, on citera les composés amphiphiles suivants :
- dans le cas d'un procédé conduit en milieu aqueux ou hydro-alcoolique, l'agent texturant utilisé est préférentiellement un tensioactif non ionique de type copolymère séquencé, et plus préférentiellement un copolymère tribloc poly(oxyde d'éthylène)-poly(oxyde de propylène)-poly(oxyde d'éthylène) dit PEO-PPO-PEO ou (EO)ₓ-(PO)_{y}-(EO)_{z}, du type de ceux décrits notamment par Zhao et al. dans le *Journal of the American Chemical Society*, vol. 120, pp. 6024-6036 (1998), et commercialisés sous le nom de marque générique de Pluronic® par BASF. Avantageusement, on peut également mettre en oeuvre des tensioactifs non ioniques tels que les poly(oxyde d'éthylène) greffés (EO)ₓC_{y} commercialisés par Aldrich sous les noms de marques Brij® ouTween®, ou encore des tensioactifs non ioniques à tête sorbitane du type de ceux commercialisés par Fluka sous le nom de marque Span®.
- en ce qui concerne le cas d'un procédé conduit en milieu non aqueux, et en particulier dans le cas d'un milieu tétrahydrofuranne, l'agent texturant est avantageusement un copolymère séquencé poly(oxyde d'éthylène)-poly(isoprène) du type de celui décrit notamment dans *Science,* vol. 278, p. 1795 (1997).

La dispersion colloïdale introduite lors de l'étape (2) du procédé de l'invention est de préférence une suspension stable comprenant des particules colloïdales dont le diamètre hydrodynamique d'au moins 50% de la population est préférentiellement compris entre 1 et 15 nm, avec une répartition granulométrique préférentiellement monodisperse de ces particules colloïdales.

Avantageusement, les particules colloïdales mises en oeuvre sont des particules à base d'un ou de plusieurs oxyde(s), hydroxyde(s) ou oxyhydroxyde(s) d'un métal ou de métaux choisi(s) parmi le cérium, le zirconium, le titane, l'aluminium, l'yttrium, les métaux de transition et les lanthanides, et avantageusement à base d'au moins un composé choisis parmi l'oxyde de cérium CeO₂, l'oxyde de zirconium ZrO₂, l'oxyde de titane TiO₂, l'alumine Al₂O₃, l'oxyhydroxyde d'aluminium AlO(OH), l'oxyde de lanthane Ln₂O₃, ou l'oxyde de fer Fe₃O₄.

Ces suspensions colloïdales stables sont du type de celles décrites notamment dans les brevets EP 206 906 et EP 208 580, ou encore dans Chemical Materials, vol. 10, pp. 3217-3223 (1998). Ces suspensions peuvent également être obtenues notamment par traitement acide, lavage ou dispersion de poudres ultrafines obtenues par exemple par des procédés de synthèse à haute température du type des combustions de chlorures métalliques dans une flamme connues de l'homme du métier.

De façon préférentielle, la concentration en particules dans les suspensions utilisées selon l'invention est supérieure à 1M.

Il est de plus à noter qu'en fonction du milieu mis en oeuvre, on peut éventuellement modifier la surface des particules de dimension nanométrique utilisées, de façon à stabiliser la dispersion et éviter la floculation de la suspension colloïdale introduite dans le milieu initial. Cette stabilisation peut notamment être réalisée par un traitement acide.

Le précurseur minéral mis en oeuvre dans l'étape (3) du procédé de l'invention dépend de la phase minérale que l'on souhaite former pour assurer la liaison inter-particulaire au sein du matériau final.

Avantageusement, la phase minérale liante formée suite à l'ajout du précurseur minéral de l'étape (3) est constituée de silice, d'alumine ou d'aluminosilicate.

Dans le cas de la formation d'une phase minérale liante de silice, le précurseur minéral mis en oeuvre peut être notamment un composé de type silicate ou alcoxyde et notamment un silicate de sodium ou un alcoxyde de silicium. Dans ce cas, on ajoute généralement au milieu initial un catalyseur de condensation sous forme d'un acide fort de type acide chlorhydrique

Dans le cas de la formation d'une phase minérale de type alumine ou aluminosilicate, on met préférentiellement en oeuvre un composé de type alcoxyde.

Par ailleurs, il est à noter que, dans le cas le plus général, le procédé est avantageusement conduit à température ambiante ou à une température supérieure à la température ambiante, de préférence à une température comprise entre 20°C et 90°C, et de façon particulièrement préférée entre 20°C et 35°C. Il est des compétences de l'homme du métier d'adapter ce paramètre de température en fonction de la nature de l'agent texturant utilisé et de l'agencement spatial du matériau mésoporeux ordonné qu'il souhaite obtenir, en fonction du diagramme de phase présenté par l'agent structurant mis en oeuvre.

En pratique, l'étape (3) d'addition du précurseur minéral est généralement suivie d'un stade de mûrissement dont la durée peut varier entre 5 minutes et 3 jours et est préférablement de l'ordre de quelques heures. Cette étape de mûrissement est avantageusement conduite à une température comprise entre 20°C et 90°C.

A l'issue de cette éventuelle étape de mûrissement, on obtient un solide mésostructuré dont les parties poreuses sont occupées par des molécules d'agent texturant. Le matériau obtenu peut éventuellement être soumis à une étape de lavage par un solvant, notamment par de l'eau ou par un solvant organique, et/ou à une étape de séchage.

De façon à obtenir un matériau de mésostructure poreuse, le solide ainsi obtenu est ensuite soumis à l'étape (4) d'élimination de l'agent texturant.

Cette étape peut être notamment réalisée par un traitement thermique. Dans ce cas, le traitement thermique est avantageusement réalisé suivant un profil de montée en température compris entre 0,2°C par minute et 3°C par minute, et de préférence suivant un profil de montée en température compris entre 0,5°C par minute et 2°C par minute, de façon à ne pas dégrader le matériau. Cette montée en température est généralement réalisée jusqu'à une température permettant l'élimination de l'agent texturant, de préférence jusqu'à une température de 500°C.

D'autre part, l'élimination du solvant peut également être réalisée par entraînement par un solvant. Il est à noter que l'entraînement par un solvant est facilité par le fait qu'on met en oeuvre de façon préférentielle un composé amphiphile non chargé, ce qui induit une interaction agent texturant-matrice suffisamment faible pour permettre ce type d'élimination.

Avantageusement, le solide obtenu à l'issue de ces différentes étapes peut en outre être soumis à un traitement thermique supplémentaire, et notamment à une calcination. Le but de ce traitement thermique supplémentaire éventuel est d'augmenter la cristallinité du matériau obtenu.

Cependant, il est connu de l'état de la technique qu'un tel traitement thermique d'un matériau mésostructuré induit d'une part une consolidation mécanique locale des parois du matériau mais également, en contrepartie, une diminution de l'épaisseur de ces parois, ce qui induit généralement une fragilisation globale de la mésostructure obtenue.

En fonction des compositions de la phase minérale liante et des particules de dimension nanométrique mises en oeuvre, il est des compétences de l'homme du métier d'adapter le traitement thermique auquel est soumis le matériau de façon à parvenir à une augmentation de la cristallinité du matériau, sans pour autant nuire à sa stabilité finale.

Toutefois, il est à noter que cette augmentation de la cristallinité par traitement thermique sans fragilisation excessive du matériau est beaucoup plus facile à réaliser dans le cas des matériaux mésostructurés de la présente invention que dans le cas des matériaux mésostructurés très peu stables décrits par ailleurs dans l'art antérieur.

En effet, le procédé particulier mis en oeuvre dans la présente invention, ainsi que l'utilisation spécifique de particules au moins partiellement cristallisées dans l'élaboration des matériaux de l'invention conduit, à l'issu de l'étape d'élimination de l'agent texturant, à des matériaux mésostructurés possédant des parois d'épaisseurs beaucoup plus importantes que dans le cas des mésostructures classiques. De fait, la présente invention permet d'obtenir des matériaux mésostructurés extrêmement stables qui, même après traitement thermique, présentent des épaisseurs de parois minérales élevées, généralement comprises entre 3 et 12 nm.

De plus, du fait de la mise en oeuvre de particules au moins partiellement cristallisées et de la possibilité d'augmenter encore la cristallinité du matériau par traitement thermique, on peut même parvenir à réaliser selon le procédé de la présente invention des matériaux présentant dans certains cas un taux de cristallinité d'au moins 90%.

Par ailleurs, il est à noter que, dans le cas où les particules et la phase minérale liante qui les contient sont de nature chimique différente, il peut se produire une réaction entre les deux espèces chimiques en présence, lors de l'étape éventuelle de traitement thermique. Cette réaction a pour conséquence une modification de la nature chimique de la phase minérale. Ainsi, dans le cas d'un matériau comportant par exemple, avant calcination, des particules d'un oxyde métallique autre que le silicium dans une phase minérale de type silice, le traitement thermique peut conduire dans certains cas à la formation d'un silicate métallique au sein de la phase minérale.

Enfin, il reste encore à préciser que, dans certains cas, il peut arriver que les particules de dimension nanométrique obtenues soient totalement recouvertes par la matrice minérale. Si on souhaite que, dans le matériau final, les particules ne soient pas totalement englobées par la matrice, le matériau obtenu peut en outre être soumis à une attaque chimique partielle de la phase minérale, notamment par des composés alcalins de type NH₄OH ou NaOH ou encore par l'acide fluorhydrique. Dans ce cas, il est des compétences de l'homme de l'art d'ajuster la concentration en ions hydroxydes ou fluorures ainsi que la durée du traitement de façon à maîtriser la dissolution de la phase minérale. Dans ces conditions, le post-traitement permet de mettre à nu au moins une partie des particules intégrées au matériau, sans pour cela fragiliser la structure du matériau final.

Compte tenu de leurs caractéristiques, les matériaux de l'invention peuvent être utilisés dans de nombreux domaines d'application, et en particulier dans les domaines de la catalyse, de la chimie d'absorption, ou encore de la séparation membranaire.

Les différents avantages de la présente invention apparaîtront encore plus explicitement à la lumière des exemples de mise en oeuvre de l'invention qui suivent et des figures 1, 2 et 3 incluses en annexe.

La figure 1 est une photographie obtenue en microscopie électronique à transmission sur un échantillon d'un matériau mésostructuré silice/particules de cérium caractérisé par un rapport molaire silice/cérium de 80 : 20 et soumis à ultramicrotomie (Grossissement : x 104 000).

La figure 2 est une photographie obtenue en microscopie électronique à transmission sur un autre échantillon d'un matériau mésostructuré silice/particules de cérium également caractérisé par un rapport molaire silice/cérium de 80: 20 et soumis à ultramicrotomie (Grossissement : x 180 000).

La figure 3 est une photographie obtenue en microscopie électronique à transmission sur un échantillon d'un matériau mésostructuré silice/particules de cérium caractérisé par un rapport molaire silice/cérium de 80 : 20 et soumis à ultramicrotomie (Grossissement : x 140 000).

Les exemples 1 à 3 exposés ci-après concernent la préparation de composés mésostructurés selon l'invention, constitués de particules de dimension nanométrique d'oxyde de cérium CeO₂ intégrées dans une phase minérale liante de silice et ne varient l'une par rapport à l'autre que par le rapport molaire silice/oxyde de cérium du composé obtenu. L'exemple 4 concerne quant à lui la préparation d'un composé mesostructuré selon l'invention comprenant des particules anisotropes à base d'AlOOH dispersées au sein d'une matrice liante de silice.

### Exemple 1 : Préparation d'un matériau mésostructuré silice/particules de cérium caractérisé par un rapport molaire silice/cérium de 90 : 10

### Etape 1 : Préparation d'une dispersion colloïdale aqueuse (D)

On a obtenu une dispersion aqueuse de colloïdes cristallisés d'oxyde de cérium CeO2 de diamètre d'environ 5 nm à l'aide des étapes suivantes :
- on a d'abord préparé un précipité de CeO₂ suivant le procédé de thermo-hydrolyse à 100°C de solutions de nitrate cérique partiellement neutralisées décrit dans la demande de brevet EP 208580.
- on a ensuite redispersé 250 g de ce précipité de thermohydrolyse à 68,6% en CeO₂ dans 200 g eau déminéralisée, puis on a laissé reposer une nuit à température ambiante
- On a centrifugé à 4500 tours par minute durant 15 minutes, puis on a lavé et concentré la partie surnageante par ultrafiltration sur une membrane de 3 KD.

La concentration de la dispersion colloïdale ainsi obtenue est de 43% en poids ou 4,15 M en CeO₂.

### Etape 2 : Préparation du composé mésostructuré SiO2/CeO2

(1) Dans un réacteur, à température ambiante, on a additionné 2 g de Pluronics P123 (copolymère POE₍₂₀₎-PPO₍₇₀₎-POE₍₂₀₎) en provenance de la société BASF et 58,1 g d'eau déminéralisée. On a ensuite ajouté 16,9 g d'une solution d'HCl à 2 moles / litre. Le mélange a été mis sous agitation à l'aide d'un barreau aimanté téflonné. Le milieu ainsi obtenu a été maintenu à 37°C.
(2) On a additionné sous agitation et de manière instantanée 0,79 g de la dispersion colloïdale (D) précédemment préparée.
(3) 3,83 g de TEOS ( tétra-éthyl ortho-silicate , MW= 208 g) ont ensuite été additionnés à débit constant en une heure à l'aide d'une pompe ( pousse-seringue KDS).

Le rapport molaire (SiO2/CeO2) introduit est de 90:10

L'ensemble réactionnel a été mis sous agitation à température de 37°C pendant 20 heures. On a ensuite transféré la dispersion obtenue dans une enceinte fermée, puis on l'a mise à l'étuve à 80°C pendant une nuit.

Le produit solide a été récupéré par centrifugation à 4500 tours par minute, puis lavé par un volume d'eau déminéralisée équivalent au volume initial de l'ensemble réactionnel.

Après séparation par centrifugation, le produit solide a été mis à sécher à température ambiante sous atmosphère d'air.
(4) Le produit a été ensuite calciné en température (500°C) pendant 6 heures. La montée en température utilisée a été de 1°C/mn.

Par mesures d'adsorption BET à l'azote, la surface spécifique mesurée pour le composé mésostructuré obtenu est de 919 m2/g et le volume poreux est de 0,96 ml/g. La taille des mésopores est quant à elle de 4 nm.

### Exemple 2 : Préparation d'un matériau mésostructuré silice/particules de cérium caractérisé par un rapport molaire silice/cérium de 80:20

De la même façon que dans l'exemple 1, on a tout d'abord préparé une dispersion aqueuse colloïdale (D), de colloïdes de CeO2 cristallisés de diamètre d'environ 5 nm définie ci-dessus.

### Préparation du composé mésostructuré SiO2/CeO2

(1) Dans un réacteur, à température ambiante, on a additionné 2 g de Pluronics P123 (copolymère POE₍₂₀₎-PPO₍₇₀₎-POE₍₂₀₎) en provenance de la société BASF et 58,1 g d'eau déminéralisée. On a ensuite ajouté 16,9 g d'une solution d'HCl à 2 moles / litre. Le mélange a été mis sous agitation à l'aide d'un barreau aimanté téflonné. Le milieu ainsi obtenu a été maintenu à 37°C.
(2) On a additionné sous agitation et de manière instantanée 1,63 g de la dispersion colloïdale (D) précédemment préparée.
(3) 3,40 g de TEOS (tétra-éthyl ortho-silicate, MW= 208 g) ont ensuite été additionnés à débit constant en une heure à l'aide d'une pompe (pousse-seringue KDS).

Le rapport molaire (SiO2/CeO2) introduit est de 80:20

L'ensemble réactionnel a été mis sous agitation à température de 37°C pendant 20 heures. On a ensuite transféré la dispersion obtenue dans une enceinte fermée , puis on l'a mise à l'étuve à 80°C pendant une nuit.

Le produit solide a été récupéré par centrifugation à 4500 tours par minute, puis lavé par un volume d'eau déminéralisée équivalent au volume initial de l'ensemble réactionnel.

Après séparation par centrifugation, le produit solide a été mis à sécher à température ambiante sous atmosphère d'air.
(4) Le produit a été ensuite calciné en température (500°C) pendant 6 heures. La montée en température utilisée a été de 1°C/mn.

Par mesures d'adsorption BET à l'azote, la surface spécifique mesurée pour le composé mésostructuré obtenu est de 1306 m2/g et le volume poreux est de 1 ml/g. La taille des mésopores est quant à elle de 4 nm.

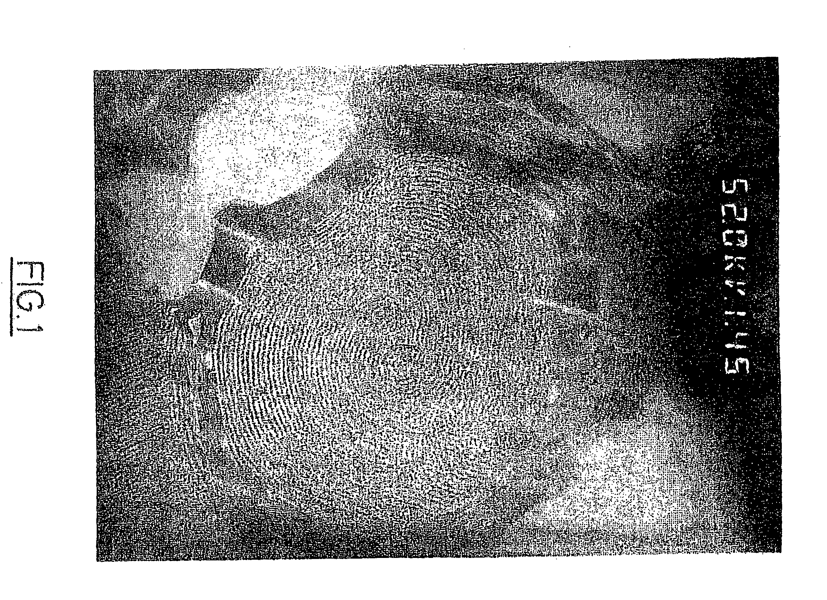

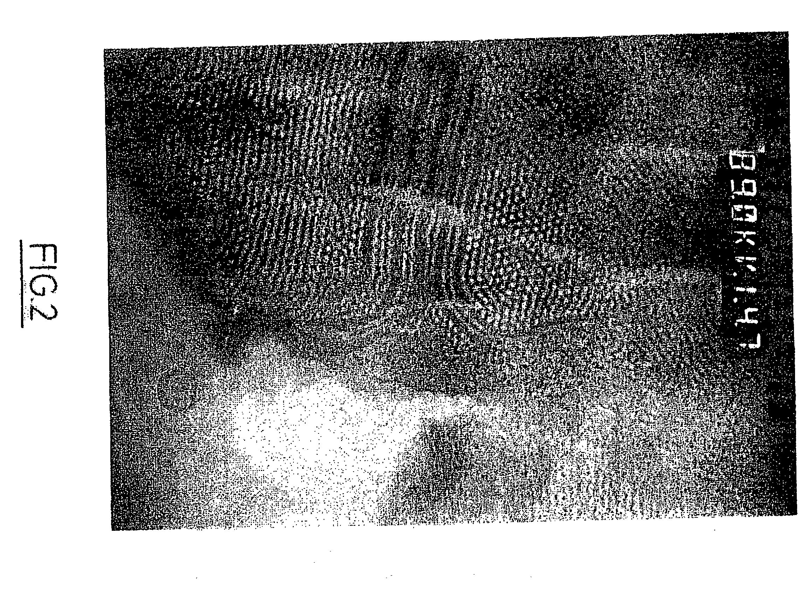

Par microscopie électronique à transmission sur des échantillons soumis à une ultramicrotomie, on observe des mésostructures vésiculaires dont la structure dite en oignon (voir par exemple la figure 1) est caractéristique, et également des mésostructures à symétrie hexagonale (voir notamment la figure 2).

Dans le cas de réseau hexagonal de pores, la distance centre à centre des pores déterminée est de l'ordre de 12 nm, ce qui suggère une épaisseur des parois de l'ordre de 8 nm.

A haute résolution, on distingue des particules parfaitement cristallisées de CeO2, insérés dans les parois de la structure mésoporeuse. Par analyse chimique localisée, on montre que ces particules de CeO2 sont parfaitement dispersées dans les parois SiO2.

### Exemple 3 : Préparation d'un matériau mésostructuré silice/particules de cérium caractérisé par un rapport molaire silice/cérium de 50:50

De la même façon que dans l'exemple 1 et l'exemple 2, on a tout d'abord préparé une dispersion aqueuse colloïdale (D), de colloïdes de CeO2 cristallisés de diamètre d'environ 5 nm définie ci-dessus.

### Préparation du composé mésostructuré SiO2/CeO2

(1) Dans un réacteur, à température ambiante , on a additionné 2 g de Pluronics P123 (copolymère POE₍₂₀₎-PPO₍₇₀₎-POE₍₂₀₎) en provenance de la société BASF et 58,1 g d'eau déminéralisée. On a ensuite ajouté 16,9 g d'une solution d'HCI à 2 moles / litre. Le mélange a été mis sous agitation à l'aide d'un barreau aimantée téflonné. Le milieu ainsi obtenu a été maintenu à 37°C.
(2) On a additionné sous agitation et de manière instantanée 4 g de la dispersion colloïdale (D) précédemment préparée.
(3) 2,08 g de TEOS (tétra-éthyl ortho-silicate , MW= 208 g) ont ensuite été additionnés à débit constant en une heure à l'aide d'une pompe (pousse-seringue KDS).

Le rapport molaire (SiO2/CeO2) introduit est de 50:50

L'ensemble réactionnel a été mis sous agitation à température de 37°C pendant 20 heures. On a ensuite transféré la dispersion obtenue dans une enceinte fermée, puis on l'a mise à l'étuve à 80°C pendant une nuit.

Le produit solide a été récupéré par centrifugation à 4500 tours par minute puis lavé par un volume d'eau déminéralisée équivalent au volume initial de l'ensemble réactionnel.

Après séparation par centrifugation, le produit solide a été mis à sécher à température ambiante sous atmosphère d'air.
(4) Le produit a été ensuite calciné en température (500°C) pendant 6 heures. La montée en température utilisée a été de 1°C/mn.

Par mesures d'adsorption BET à l'azote, la surface spécifique mesurée pour le composé mésostructuré obtenu est de 534 m2/g et le volume poreux est de 0,37 ml/g. La taille des mésopores est quant à elle de 4 nm.

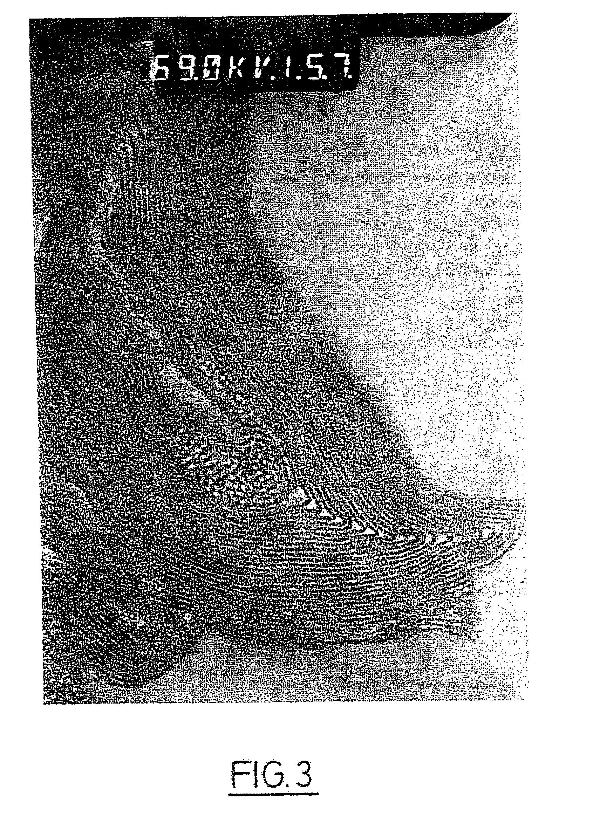

Par microscopie électronique à transmission sur des échantillons soumis à une ultramicrotomie, on observe une texture ordonnée du matériau ( voir par exemple la figure 3).

Dans la structure mésoporeuse observée sur la figure 3, la distance centre à centre des pores déterminée est de l'ordre de 14 nm, ce qui suggère une épaisseur des parois de l'ordre de 10 nm.

A haute résolution, on distingue des particules parfaitement cristallisées de CeO2, insérés dans les parois de la structure mésoporeuse. Par analyse chimique localisée, on montre que ces particules de CeO2 sont parfaitement dispersées dans les parois SiO2.

### Exemple 4 : Préparation d'un matériau mésostructuré silice/particules d'AlOOH caractérisé par un rapport molaire silice/aluminium de 91 : 9

### Etape 1 : Préparation d'une dispersion colloïdale aqueuse (D') de bohémite à 1,3 mole par litre en AlOOH.

On a obtenu une dispersion aqueuse comprenant des colloïdes d'AIOOH cristallisés à l'aide des étapes suivantes :
- on a additionné, dans un bécher contenant 957 ml d'eau déminéralisée, 43 ml d'acide nitrique 1M. On a mis ce mélange sous agitation. On a ensuite ajouté à la spatule 120 g de bohémite Condéa (qualité Plural 30120 à 87%) et on a maintenu le milieu sous agitation énergique pendant 30 minutes.
- on a alors centrifugé le milieu obtenu pendant 20 minutes à 4500 tours par minute, puis on a prélevé le surnageant par aspiration en prenant soin de ne pas entraîner les particules du culot.

Par cryo-microscopie, on a observé les particules présentes au sein de la dispersion colloïdale de bohémite ainsi obtenue. Il s'agit de particules anisotropiques caractérisées par une longueur moyenne de 50 à 100 nm et des diamètres transversaux moyens de l'ordre de 5 nm.

La dispersion (D') a été obtenue en ajustant la concentration de la dispersion colloïdale de bohémite précédemment réalisée à 1,3 mole par litre en AIOOH, par addition d'eau déminéralisée.

### Etape 2 : Préparation du composé mésostructuré SiO2/Al₂O₃

(1) Dans un réacteur, à température ambiante, on a additionné 10 g de Pluronics P123 (copolymère POE₍₂₀₎-PPO₍₇₀₎-POE₍₂₀₎) en provenance de la société BASF et 310 g d'eau déminéralisée. On a ensuite ajouté 84,5 g d'une solution d'HCI à 2 moles/litre. Le mélange a été mis sous agitation magnétique à 25°C.
(2) On a ensuite additionné, sous agitation et de manière instantanée, 6,85 ml de la dispersion colloïdale (D') de bohémite à 1,3 mole par litre en AlOOH préparée dans l'étape 1. Le milieu obtenu a alors été maintenu à 35°C.
(3) 1,91 g de TEOS (tétra-éthyl ortho-silicate, MW= 208 g) ont ensuite été additionnés à débit constant en une heure à l'aide d'une pompe ( pousse-seringue KDS).

Le rapport molaire (SiO2/CeO2) introduit est de 91:9

L'ensemble réactionnel a été mis sous agitation à température de 35°C pendant 20 heures. On a ensuite transféré la dispersion obtenue dans une enceinte fermée, puis on l'a mise à l'étuve à 80°C pendant une nuit.

Le produit solide a été récupéré par centrifugation à 4500 tours par minute pendant 10 minutes, puis a été lavé par un volume d'eau déminéralisée équivalent au volume initial de l'ensemble réactionnel.

Après séparation par centrifugation, le produit solide a été mis à sécher à température ambiante sous atmosphère d'air.
(4) Le produit a ensuite été calciné en température (500°C) pendant 6 heures. La montée en température utilisée a été de 1°C/minute.

Par mesures d'adsorption BET à l'azote, la surface spécifique mesurée pour le composé mésostructuré obtenu est de 1140 m²/g et le volume poreux est de 1,27 cm³/g. La taille des mésopores est quant à elle de 5 nm.

## Revendications

1. Matériau mésoporeux ordonné, ou mésostructuré, thermiquement stable, comprenant une phase minérale au sein de laquelle sont dispersées des particules de dimension nanométrique au moins partiellement cristallines, le taux de cristallinité global dudit matériau mésostructuré ou mésoporeux ordonné étant au moins de 10% en volume.

2. Matériau mésoporeux ordonné ou mésostructuré selon la revendication 1, **caractérisé en ce que** ledit matériau présente, au moins localement, une ou plusieurs mésostructure(s) choisie(s) parmi :
- les mésostructures mésoporeuses de symétrie hexagonale tridimensionnelle P63/mmc, de symétrie hexagonale bidimensionnelle, de symétrie cubique tridimensionnelle la3d, lm3m ou Pn3m; ou
- les mésostructures de type vésiculaires ou lamellaires.

3. Matériau mésoporeux ordonné ou mésostructuré selon la revendication 1 ou la revendication 2, **caractérisé en ce que** lesdites particules de dimension nanométrique sont des particules de morphologie sphérique ou anisotrope dont au moins 50% de la population possède un diamètre moyen compris entre 1 et 10 nm, la répartition granulométrique desdites particules étant monodisperse.

4. Matériau mésoporeux ordonné ou mésostructuré selon l'une quelconque des revendication 1 à 3, **caractérisé en ce que** lesdites particules de dimension nanométrique sont des particules fortement anisotropiques, de type bâtonnets, dont au moins 50% de la population possède un diamètre transversal moyen compris entre 1 et 10 nm et une longueur moyenne ne dépassant pas 100 nm, la répartition granulométrique desdites particules étant monodisperse..

5. Matériau mésoporeux ordonné ou mésostructuré selon l'une quelconque des revendications 1 à 4, **caractérisé en ce que** lesdites particules de dimension nanométrique sont des particules présentant un taux de cristallinité de 30 à 100% en volume.

6. Matériau mésoporeux ordonné ou mésostructuré selon l'une quelconque des revendications 1 à 5, **caractérisé en ce que** lesdites particules de dimension nanométrique sont des particules à base d'un ou de plusieurs oxyde(s), hydroxyde(s) ou oxyhydroxyde(s) d'un métal ou de métaux choisi(s) parmi le cérium, le zirconium, le titane, l'aluminium, l'yttrium, les métaux de transitions et les lanthanides.

7. Matériau mésoporeux ordonné ou mésostructuré selon l'une quelconque des revendications 1 à 6, **caractérisé en ce que** lesdites particules de dimension nanométrique sont des particules à base d'au moins un composé choisis parmi l'oxyde de cérium CeO₂, l'oxyde de zirconium ZrO₂, l'oxyde de titane TiO₂, l'alumine Al₂O₃, l'oxyhydroxyde d'aluminium AlO(OH), l'oxyde de lanthane La₂O₃, ou l'oxyde de fer Fe₃O₄.

8. Matériau mésoporeux ordonné ou mésostructuré selon l'une quelconque des revendications 1 à 7, **caractérisé en ce que** ladite matrice minérale est une matrice, amorphe à partiellement cristalline, constituée de façon préférentielle de silice, d'alumine, ou de silicate d'un ou de plusieurs métaux.

9. Matériau mésoporeux ordonné ou mésostructuré selon l'une quelconque des revendications 1 à 8, **caractérisé en ce que** les particules de dimension nanométriques et la phase minérale liante intégrant ces particules sont de natures chimiques différentes.

10. Matériau mésoporeux ordonné ou mésostructuré selon l'une quelconque des revendications 1 à 9, **caractérisé en ce qu'**une partie au moins des particules de dimension nanométrique dispersées au sein de la phase minérale liante est en contact avec les parties poreuses constituant l'espace interne du matériau.

11. Matériau mésoporeux ordonné ou mésostructuré selon l'une quelconque des revendications 1 à 10, **caractérisé en ce que** le rapport molaire phase minérale liante/particules de dimension nanométrique est compris entre 20:80 et 99,5:0,5.

12. Matériau mésoporeux ordonné ou mésostructuré selon la revendication 11, **caractérisé** en ce le rapport molaire phase minérale liante/particules de dimension nanométrique est compris entre 40:60 et 95:5.

13. Matériau mésoporeux ordonné ou mésostructuré selon l'une quelconque des revendications 1 à 12, **caractérisé en ce que** l'épaisseur globale des parois de la structure mésoporeuse, qui intègrent les particules est comprise entre 4 et 10 nm.

14. Matériau mésoporeux ordonné ou mésostructuré selon l'une quelconque des revendications 1 à 13, **caractérisé en ce que** ledit matériau présente une surface spécifique comprise entre 400 et 1500 m²/g.

15. Procédé de préparation d'un matériau mésoporeux ordonné ou mésostructuré comprenant une phase minérale au sein de laquelle sont dispersées des particules de dimension nanométrique, **caractérisé en ce qu'**il comprend les étapes consistant à :
(1) réaliser un milieu initial comprenant un agent texturant ;
(2) ajouter audit milieu une dispersion colloïdale de particules de dimension nanométrique ;
(3) former, par ajout d'un précurseur minéral dans le milieu, une phase minérale présentant une mésostructure organisée, ladite phase minérale intégrant, au sein des parois de cette structure, lesdites particules de dimension nanométrique ; et
(4) éliminer l'agent structurant.

16. Procédé de préparation d'un matériau mésoporeux ordonné ou mésostructuré selon la revendication 15, **caractérisé en ce que** le milieu initial formé lors de l'étape (1) est un milieu aqueux.

17. Procédé de préparation d'un matériau mésoporeux ordonné ou mésostructuré selon la revendication 15 ou 16, **caractérisé en ce que** le milieu initial formé lors de l'étape (1) est un milieu hydro-alcoolique, de préférence un milieu eau/éthanol.

18. Procédé de préparation d'un matériau mésoporeux ordonné ou mésostructuré selon l'une quelconque des revendications 15 à 17, **caractérisé en ce que** le milieu initial formé lors de l'étape (1) est un milieu non aqueux, de préférence un milieu chloroforme ou tétrahydrofuranne

19. Procédé de préparation d'un matériau mésoporeux ordonné ou mésostructuré selon l'une quelconque des revendications 15 à 18, **caractérisé en ce que** le pH dudit milieu initial est inférieur à 4.

20. Procédé de préparation d'un matériau mésoporeux ordonné ou mésostructuré selon l'une quelconque des revendications 15 à 19, **caractérisé en ce que** le procédé est conduit en milieu aqueux ou hydro-alcoolique et **en ce que** l'agent texturant mis en oeuvre est un tensioactif non ionique de type copolymère séquencé, choisi de préférence parmi les copolymères tribloc poly(oxyde d'éthylène)-poly(oxyde de propylène)-poly(oxyde d'éthylène) ou les poly(oxyde d'éthylène) greffés.

21. Procédé de préparation d'un matériau mésoporeux ordonné ou mésostructuré selon l'une quelconque des revendications 15 à 20, **caractérisé en ce que** le procédé est conduit en milieu non aqueux, de préférence en milieu tétrahydrofuranne, et **en ce que** l'agent texturant mis en oeuvre est un copolymère séquencé poly(oxyde d'éthylène)-poly(isoprène).

22. Procédé de préparation d'un matériau mésoporeux ordonné ou mésostructuré selon l'une quelconque des revendications 15 à 21, **caractérisé en ce que** la dispersion colloïdale introduite lors de l'étape (2) dudit procédé consiste en une suspension stable comprenant des particules colloïdales dont au moins 50% de la population possède un diamètre hydrodynamique compris entre 1 et 15 nm, la répartition granulométrique desdites particules colloïdales étant monodisperse.

23. Procédé de préparation d'un matériau mésoporeux ordonné ou mésostructuré selon l'une quelconque des revendications 15 à 22, **caractérisé en ce que** les particules colloïdales de la dispersion colloïdale introduite lors de l'étape (2) sont des particules à base d'un ou de plusieurs oxyde(s), hydroxyde(s) ou oxyhydroxyde(s) d'un métal ou de métaux choisi(s) parmi le cérium, le zirconium, le titane, l'aluminium, l'yttrium, les métaux de transition et les lanthanides, et de préférence des particules à base d'au moins un composé choisi parmi l'oxyde de cérium CeO₂, l'oxyde de zirconium ZrO₂, l'oxyde de titane TiO₂, l'alumine Al₂O₃, l'oxyhydroxyde d'aluminium AlO(OH), l'oxyde de lanthane Ln₂O₃, ou l'oxyde de fer Fe₃O₄.

24. Procédé de préparation d'un matériau mésoporeux ordonné ou mésostructuré selon l'une quelconque des revendications 15 à 23, **caractérisé en ce que** la concentration en particules dans les suspensions introduites lors de l'étape (2) est supérieure à 1M.

25. Procédé de préparation d'un matériau mésoporeux ordonné ou mésostructuré selon l'une quelconque des revendications 15 à 24, **caractérisé en ce que** la surface des particules colloïdales de la dispersion colloïdale introduite lors de l'étape (2) est modifiée par un traitement acide.

26. Procédé de préparation d'un matériau mésoporeux ordonné ou mésostructuré selon l'une quelconque des revendications 15 à 25, **caractérisé en ce que** la phase minérale liante formée suite à l'ajout du précurseur minéral de l'étape (3) est constituée de silice, d'alumine ou d'aluminosilicate.

27. Procédé de préparation d'un matériau mésoporeux ordonné ou mésostructuré selon la revendication 26, **caractérisé en ce que** le précurseur minéral introduit au milieu lors de l'étape (3) est un silicate ou un alcoxyde.

28. Procédé de préparation d'un matériau mésoporeux ordonné ou mésostructuré selon l'une quelconque des revendications 15 à 27 **caractérisé en ce que** le procédé est conduit à une température comprise entre 20°C et 90°C, et de façon particulièrement préférée entre 20°C et 35°C.

29. Procédé de préparation d'un matériau mésoporeux ordonné ou mésostructuré selon l'une quelconque des revendications 15 à 28 **caractérisé en ce que** l'étape (3) d'addition du précurseur minéral est suivie d'un stade de mûrissement dont la durée est préférablement de l'ordre de quelques heures.

30. Procédé de préparation d'un matériau mésoporeux ordonné ou mésostructuré selon l'une quelconque des revendications 15 à 29 **caractérisé en ce que** l'étape (4) d'élimination de l'agent texturant est réalisée par un traitement thermique ou par un entraînement par un solvant.

31. Procédé de préparation d'un matériau mésoporeux ordonné ou mésostructuré selon l'une quelconque des revendications 15 à 30, **caractérisé en ce que** le solide mésostructuré obtenu est en outre soumis à un traitement thermique, notamment à une calcination.

32. Procédé de préparation d'un matériau mésoporeux ordonné ou mésostructuré selon la revendication 31, **caractérisé en ce que** le traitement thermique induit une modification de la structure chimique de la phase minérale liante.

33. Procédé de préparation d'un matériau mésoporeux ordonné ou mésostructuré selon l'une quelconque des revendications 15 à 32, **caractérisé en ce que** le matériau à l'issu de l'étape (4) et d'une éventuelle étape de traitement thermique est en outre soumis à une attaque chimique partielle de la phase minérale.

34. Matériau mésoporeux ordonné ou mésostructuré comprenant au sein de ses parties poreuses un agent texturant, susceptible d'être obtenu à l'issu de l'étape (3) d'un procédé selon l'une quelconque des revendications 15 à 33.

## Patentansprüche

1. Mesoporöses geordnetes, oder mesostrukturiertes, thermisch stabiles Material, umfassend eine mineralische Phase, in deren Innerem Partikel mit einer Dimension im Nanometerbereich, die mindestens teilweise kristallin sind, dispergiert sind, wobei der Gesamtkristallinitätsgrad des mesostrukturierten oder mesoporösen geordneten Materials mindestens 10 Volumen-% beträgt.

2. Mesoporöses geordnetes oder mesostrukturiertes Material nach Anspruch 1, dadurch charakterisiert, dass das Material zumindest lokal eine oder mehr Mesostrukturen aufweist, die ausgewählt wird/werden aus:
- mesoporösen Mesostrukturen von hexagonaler dreidimensionaler Symmetrie P63/mmc, hexagonaler zweidimensionaler Symmetrie, dreidimensionaler kubischer Symmetrie la3d, lm3m oder Pn3m; oder
- Mesostrukturen vom vesiculären oder lamellaren Typ.

3. Mesoporöses geordnetes oder mesostrukturiertes Material nach Anspruch 1 oder Anspruch 2, dadurch charakterisiert, dass die Partikel mit einer Dimension im Nanometerbereich Partikel mit sphärischer oder anisotroper Morphologie sind, von denen mindestens 50 % der Population einen mittleren Durchmesser zwischen 1 und 10 nm aufweisen, wobei die granulometrische Verteilung der Partikel monodispers sind.

4. Mesoporöses geordnetes oder mesostrukturiertes Material nach einem der Ansprüche 1 bis 3, dadurch charakterisiert, dass die Partikel mit einer Dimension im Nanometerbereich stark anisotrope Partikel vom Stäbchentyp sind, von denen mindestens 50 % der Population einen mittleren Querdurchmesser zwischen 1 und 10 nm und eine mittlere Länge aufweisen, die 100 nm nicht übersteigt, wobei die granulometrische Verteilung der Partikel monodispers ist.

5. Mesoporöses geordnetes oder mesostrukturiertes Material nach einem der Ansprüche 1 bis 4, dadurch charakterisiert, dass die Partikel mit einer Dimension im Nanometerbereich Partikel sind, die einen Kristallinitätsgrad von 30 bis 100 Volumen-% aufweisen.

6. Mesoporöses geordnetes oder mesostrukturiertes Material nach einem der Ansprüche 1 bis 5, dadurch charakterisiert, dass die Partikel mit einer Dimension im Nanometerbereich Partikel auf der Basis von einem oder mehreren Oxiden, Hydroxiden oder Oxyhydroxiden eines Metalls oder von Metallen sind, die ausgewählt werden aus Cer, Zirkonium, Titan, Aluminium, Yttrium, den Übergangsmetallen und den Lanthaniden.

7. Mesoporöses geordnetes oder mesostrukturiertes Material nach einem der Ansprüche 1 bis 6, dadurch charakterisiert, dass die Partikel mit einer Dimension im Nanometerbereich Partikel auf der Basis von mindestens einer Verbindung sind, die ausgewählt wird aus Ceroxid CeO₂, Zirkoniumoxid ZrO₂, Titanoxid TiO₂, Aluminiumoxid Al₂O₃, Aluminiumoxyhydroxid AlO(OH), Lanthanoxid La₂O₃, oder Eisenoxid Fe₃O₄.

8. Mesoporöses geordnetes oder mesostrukturiertes Material nach einem der Ansprüche 1 bis 7, dadurch charakterisiert, dass die mineralische Matrix eine amorphe bis partiell kristalline Matrix ist, die bevorzugt aus Siliziumoxid, Aluminiumoxid oder einem Silikat von einem oder mehreren Metallen gebildet wird.

9. Mesoporöses geordnetes oder mesostrukturiertes Material nach einem der Ansprüche 1 bis 8, dadurch charakterisiert, dass die Partikel mit einer Dimension im Nanometerbereich und die diese Partikel beinhaltende bindende mineralische Phase eine unterschiedliche chemische Natur aufweisen.

10. Mesoporöses geordnetes oder mesostrukturiertes Material nach einem der Ansprüche 1 bis 9, dadurch charakterisiert, dass mindestens ein Teil der Partikel mit einer Dimension im Nanometerbereich, die im Inneren der bindenden mineralischen Phase dispergiert sind,.in Kontakt mit den porösen Bereichen steht, die den Innenraum des Materials bilden.

11. Mesoporöses geordnetes oder mesostrukturiertes Material nach einem der Ansprüche 1 bis 10, dadurch charakterisiert, dass das molare Verhältnis mineralische bindende Phase/Partikel mit einer Dimension im Nanometerbereich zwischen 20 : 80 und 99,5 : 0,5 liegt.

12. Mesoporöses geordnetes oder mesostrukturiertes Material nach Anspruch 11, dadurch charakterisiert, dass das molare Verhältnis mineralische bindende Phase/Partikel mit einer Dimension im Nanometerbereich zwischen 40 : 60 und 95 : 5 liegt.

13. Mesoporöses geordnetes oder mesostrukturiertes Material nach einem der Ansprüche 1 bis 12, dadurch charakterisiert, dass die Gesamtdicke der Wände der mesoporösen Struktur, die die Partikel beinhalten, zwischen 4 und 10 Nanometer liegt.

14. Mesoporöses geordnetes oder mesostrukturiertes Material nach einem der Ansprüche 1 bis 13, dadurch charakterisiert, dass das Material eine spezifische Oberfläche zwischen 400 und 1500 m²/g aufweist.

15. Verfahren zur Herstellung eines mesoporösen geordneten oder mesostrukturierten Materials, umfassend eine mineralische Phase, in deren Innerem Partikel mit einer Dimension im Nanometerbereich dispergiert sind, dadurch charakterisiert, dass es die folgende Schritte umfasst:
(1) Herstellen eines Anfangsmediums, umfassend ein Strukturfestiger-Mittel;
(2) Zufügen einer kolloidalen Dispersion von Partikeln mit einer Dimension im Nanometerbereich zu diesem Medium;
(3) Ausbilden einer mineralischen Phase, welche eine organisierte Mesostruktur aufweist, durch Zugabe eines mineralischen Vorläufers in das Medium, wobei die mineralische Phase im Inneren der Wände dieser Struktur die Partikel mit einer Dimension im Nanometerbereich beinhaltet;
(4) Entfernung des Strukturfestiger-Mittels.

16. Verfahren zur Herstellung eines mesoporösen geordneten oder mesostrukturierten Materials nach Anspruch 15, dadurch charakterisiert, dass das in Schritt (1) gebildete Anfangsmedium ein wässriges Medium ist.

17. Verfahren zur Herstellung eines mesoporösen geordneten oder mesostrukturierten Materials nach Anspruch 15 oder 16, dadurch charakterisiert, dass das im Schritt (1) gebildete Anfangsmedium ein hydro-alkoholisches Medium ist, bevorzugt ein Medium Wasser/Ethanol.

18. Verfahren zur Herstellung eines mesoporösen geordneten oder mesotrukturierten Materials nach einem der Ansprüche 15 bis 17, dadurch charakterisiert, dass das im Schritt (1) gebildete Anfangsmedium ein nicht-wässriges Medium ist, bevorzugt ein Chloroform- oder Tetrohydrofuran-Medium.

19. Verfohren zur Herstellung eines mesoporösen geordneten oder mesostrukturierten Materials nach einem der Ansprüche 15 bis 18, dadurch charakterisiert, dass der pH des Anfangsmediums niedriger als 4 ist.

20. Verfahren zur Herstellung eines mesoporösen geordneten oder mesostrukturierten Materials nach einem der Ansprüche 15 bis 19, dadurch charakterisiert, dass das Verfahren in einem wässrigen oder hydro-alkoholischen Medium durchgeführt wird und dass das eingesetzte Strukturfestiger-Mittel ein nichtionischer oberflächenaktiver Stoff vom Typ Blockcopolymer ist, ausgewählt bevorzugt aus den Triblock-Copolymeren Poly(ethylenoxid)-Poly(propylenoxid) Poly(ethylenoxid), oder den gepfropften Poly(ethylenoxiden).

21. Verfahren zur Herstellung eines mesoporösen geordneten oder mesostrukturierten Materials nach einem der Ansprüche 15 bis 20, dadurch charakterisiert, dass das Verfahren in einem nicht-wässrigen Medium durchgeführt wird, bevorzugt in einem Tetrahydrofuran-Medium, und dass das eingesetzte Strukturfestiger-Mittel ein Poly(ethylenoxid)-Poly(isopren) Blockcopolymer ist.

22. Verfahren zur Herstellung eines meoporösen geordneten , oder mesostrukturierten Materials nach einem der Ansprüche 15 bis 21, dadurch charakterisiert, dass die in Schritt (2) des Verfahrens eingeführte kolloidale Dispersion aus einer stabilen Suspension besteht, umfassend kolloidale Partikel, von denen mindesten 50 % der Population einen hydrodynamischen Durchmesser zwischen 1 und 15 nm aufweist, und wobei die granolumetrische Verteilung der kolloidalen Partikel monodispers ist.

23. Verfahren zur Herstellung eines mesoporösen geordneten oder mesostrukturierten Materials nach einem der Ansprüche 15 bis 22, dadurch charakterisiert, dass die kollodialen Partikel der in Schritt (2) eingeführten kollodialen Dispersion Partikel auf der Basis eines oder mehrerer Oxid(e), Hydroxid(e) oder Oxyhydroxid(e) eines Metalles oder von Metallen ist, ausgewählt aus Cer, Zirkonium, Titan, Aluminium, Yttrium, den Übergangsmetallen und den Lanthaniden, bevorzugt Partikel auf der Basis mindestens einer Verbindung, die ausgewählt wird aus Ceroxid CeO₂, Zirkoniumoxid ZrO₂, Titanoxid TiO₂, Aluminium Al₂O₃, Aluminiumoxyhydoxid AlO(OH), Lanthanoxid Ln₂O₃ oder Eisenoxid Fe₃O₄.

24. Verfahren zur Herstellung eines mesoporösen geordneten oder mesostrukturierten Materials nach einem der Ansprüche 15 bis 23, dadurch charakterisiert, dass die Konzentration der Partikel in denen in Schritt (2) eingeführten Suspensionen größer ist als 1M.

25. Verfahren zur Herstellung eines mesoporösen geordneten oder mesostrukturierten Materials nach einem der Ansprüche 15 bis 24, dadurch charakterisiert, dass die Oberfläche der kolloidalen Partikel der in Schritt (2) eingeführten kolloidalen Dispersion durch eine Säurebehandlung modifiziert ist.

26. Verfahren zur Herstellung eines mesoporösen geordneten oder mesostrukturierten Materials nach einem der Ansprüche 15 bis 25, dadurch charakterisiert, dass die bindende mineralische Phase, die sich im Anschluss an die Zugabe des mineralischen Vorläufers von Schritt (3) bildet, aus Siliziumoxid, Aluminiumoxid oder Alumosilikat gebildet wird.

27. Verfahren zur Herstellung eines mesoporösen geordneten oder mesostrukturierten Materials nach Anspruch 26, dadurch charakterisiert, dass der in Schritt (3) in das Medium eingeführte mineralische Vorläufer ein Silikat oder ein Alkoxid ist.

28. Verfahren zur Herstellung eines mesoporösen geordneten oder mesostrukturierten Materials nach einem der Ansprüche 15 bis 27, dadurch charakterisiert, dass das Verfahren bei einer Temperatur zwischen 20 und 90 °C, besonders bevorzugt zwischen 20 und 35 °C durchgeführt wird.

29. Verfahren zur Herstellung eines mesoporösen geordneten oder mesostrukturierten Materials nach einem der Ansprüche 15 bis 28, dadurch charakterisiert, das der Schritt (3) der Zugabe eines mineralischen Vorläufers gefolgt wird von einem Reifungsstadium, dessen Dauer bevorzugt in der Größenordnung von einigen Stunden liegt.

30. Verfahren zur Herstellung eines mesoporösen geordneten oder mesostrukturierten Materials nach einem der Ansprüche 15 bis 29, dadurch charakterisiert, dass der Schritt (4) der Entfernung des Strukturfestigermittels durch eine thermische Behandlung oder durch Aufschlämmung mit einem Lösungsmittel erfolgt.

31. Verfahren zur Herstellung eines mesoporösen geordneten oder mesostrukturierten Materials nach einem der Ansprüche 15 bis 30, dadurch charakterisiert, dass der erhaltene mesostrukturierte Feststoff darüber hinaus einer thermische. Behandlung, insbesondere einer Kalzinierung unterworfen wird.

32. Verfahren zur Herstellung eines mesoporösen geordneten oder mesostrukturierten Materials nach Anspruch 31, dadurch charakterisiert, dass die thermische Behandlung eine Modifikation der chemischen Struktur der bindenden mineralischen Phase induziert.

33. Verfahren zur Herstellung eines mesoporösen geordneten oder mesostrukturierten Materials nach einem der Ansprüche 15 bis 32, dadurch charakterisiert, dass das Material am Ende von Schritt (4) und gegebenenfalls nach dem Schritt der thermischen Behandlung darüber hinaus einem teilweisen chemischen Angriff der mineralischen Phase unterzogen wird.

34. Mesoporöses geordnetes oder mesostrukturiertes Material, das in seinen porösen Bereichen ein Strukturfestigermittel umfasst, und das erhalten werden kann am Ende vom Schritt (3) eines Verfahrens nach einem der Ansprüche 15 bis 33.

## Claims

1. A thermally stable ordered mesoporous or mesostructured material; comprising a mineral phase within which at least partially crystalline particles with nanometric dimensions are dispersed, the overall proportion of crystallinity of the said mesostructured or ordered mesoporous material being at least 10% by volume.

2. An ordered mesoporous or mesostructured material according to claim 1, **characterized in that** the said material exhibits, at least locally, one or more mesostructures selected from:
- mesoporous mesostructures with three-dimensional hexagonal symmetry P63/mmc, two-dimensional hexagonal symmetry, three-dimensional cubic symmetry la3d, lm3m or Pn3m; or
- mesostructures of vesicular or lamellar type.

3. An ordered mesoporous or mesostructured material according to claim 1 or claim 2, **characterized in that** the said particles with nanometric dimensions are particles with spherical or anisotropic morphology, of which at least 50% of the population has a mean diameter lying between 1 and 10 nm, the granulometric distribution of the said particles being mono-dispersed.

4. An ordered mesoporous or mesostructured material according to any one of claims 1 to 3, **characterized in that** the said particles with nanometric dimensions arc strongly anisotropic particles of rod type, of which at least 50% of the population has a mean transverse diameter lying between 1 and 10 nm and a mean length not exceeding 100 nm, the granulometric distribution of the said particles being mono-dispersed.

5. An ordered mesoporous or mesostructured material according to any one of claims 1 to 4, **characterized in that** the said particles of nanometric dimensions are particles exhibiting a proportion of crystallinity from 30 to 100% by volume.

6. An ordered mesoporous or mesostructured material according to any one of claims 1 to 5, **characterized in that** the said particles of nanometric dimensions are particles based on one or more oxides, hydroxides or oxyhydroxides of a metal or metals selected from cerium, zirconium, titanium, aluminium, yttrium, the transition metals and the lanthanides.

7. An ordered mesoporous or mesostructured material according to any one of claims 1 to 6, **characterized in that** the said particles of nanometric dimensions are particles based on at least one compound selected from cerium oxide CeO₂, zirconium oxide ZrO₂, titanium oxide TiO₂, alumina Al₂O₃, aluminium oxyhydride AlO(OH), lanthanum oxide La₂O₃ and iron oxide Fe₃O₄.

8. An ordered mesoporous or mesostructured material according to any one of claims 1 to 7, **characterized in that** the said mineral matrix is an amorphous or partially crystalline matrix preferably formed of silica, alumina or a silicate of one or more metals.

9. An ordered mesoporous or mesostructured material according to any one of claims 1 to 8, **characterized in that** the particles of nanometric dimensions and the bonding mineral phase incorporating these particles are of different chemical natures.

10. An ordered mesoporous or mesostructured material according to any one of claims 1 to 9, **characterized in that** a part at least of the particles of nanomctric dimensions dispersed within the bonding mineral phase is in contact with the porous parts forming the internal space of the material.

11. An ordered mesoporous or mesostructured material according to any one of claims 1 to 10, **characterized in that** the molar ratio of the bonding mineral phase to the particles of nanometric dimensions lies between 20:80 and 99.5:0.5.

12. An ordered mesoporous or mesostructured material according to claim 11, **characterized in that** the molar ratio of the bonding mineral phase to the particles of nanometric dimensions lies between 40:60 and 95:5.

13. An ordered mesoporous or mesostructured material according to any one of claims 1 to 12, **characterized in that** the overall thickness of the walls of the mesoporous structure which incorporates the particles lies between 4 and 10 nm.

14. An ordered mesoporous or mesostructured material according to any one of claims 1 to 13, **characterized in that** the said material has a specific surface lying between 400 and 1500 m²/g.

15. A method of making an ordered mesoporous or mesostructured material comprising a mineral phase within which particles with nanometric dimensions are dispersed, **characterized in that** comprises the steps consisting of:
(1) providing an initial medium comprising a texturing agent;
(2) adding a colloidal dispersion of particles of nanometric dimensions to the said medium;
(3) forming a mineral phase having an organised mesostructure by adding a mineral precursor to the medium, the said mineral phase incorporating within the walls of this structure the said particles of nanometric dimensions; and
(4) eliminating the structuring agent.

16. A method of making an ordered mesoporous or mesostructured material according to claim 15, **characterized in that** the initial medium formed in step (1) is an aqueous medium.

17. A method of making an ordered mesoporous or mesostructured material according to claim 15 or 16, **characterized in that** the initial medium formed in stage (1) is a hydro-alcoholic medium, preferably a water/ethanol medium.

18. A method of making an ordered mesoporous or mesostructured material according to any one of claims 15 to 17, **characterized in that** the initial medium formed in stage (1) is a non-aqueous medium, preferably a chloroform or tetrahydrofurane medium.

19. A method of making an ordered mesoporous or mesostructured material according to any one of claims 15 to 18, **characterized in that** the pH of the initial medium is less than 4.

20. A method of making an ordered mesoporous or mesostructured material according to any one of claims 15 to 19, **characterized in that** the method is performed in an aqueous or hydro-alcoholic medium and **in that** the texturing agent employed is a non-ionic surface active agent of sequenced polymer type, preferably selected from the three unit copolymers poly(ethylcne oxide)-poly(propylene oxide)-poly(ethylene oxide) or the grafted poly(ethylene oxides).

21. A method of making an ordered mesoporous or mesostructured material according to any one of claims 15 to 20, **characterized in that** the method is performed in a non-aqueous medium, preferably a tetrahydrofurane medium and **in that** the texturing agent used is a sequenced copolymer poly(ethylene oxide)-poly(isoprene).

22. A method of making an ordered mesoporous or mesostructured material according to any one of claims 15 to 21, **characterized in that** the colloidal dispersion introduced during the step (2) of the said method consists in a stable suspension comprising colloidal particles of which at least 50% of the population has a hydrodynamic diameter lying between 1 and 15 nm, the granulometric distribution of the said colloidal particles being mono-dispersed.

23. A method of making an ordered mesoporous or mesostructured material according to any one of claims 15 to 22, **characterized in that** the colloidal particles of the colloidal dispersion introduced during the step (2) are particles based on one or more oxides, hydroxides or oxyhydroxides of a metal or metals selected from cerium, zirconium, titanium, aluminium, yttrium, the transition metals and the lanthanides and preferably particles based on at least one composition selected from cerium oxide CeO₂, zirconium oxide ZrO₂, titanium oxide TiO₂, alumina Al₂O₃, aluminium oxyhydride AlO(OH), lanthanum oxide La₂O₃ and iron oxide Fe₃O₄.

24. A method of making an ordered mesoporous or mesostructured material according to any one of claims 15 to 23, **characterized in that** the concentration of the particles in the suspensions introduced during the step (2) is greater than 1 M.

25. A method of making an ordered mesoporous or mesostructured material according to any one of claims 15 to 24, **characterized in that** the surface of the colloidal particles of the dispersion introduced during the step (2) is modified by acidic treatment.

26. A method of making an ordered mesoporous or mesostructured material according to any one of claims 15 to 25, **characterized in that** the bonding mineral phase formed following the addition of the precursor mineral of step (3) is formed of silica, alumina or alumina-silicate.

27. A method of making an ordered mesoporous or mesostructured material according to claim 26, **characterized in that** the mineral precursor introduced during step (3) is a silicate or an alkoxide.

28. A method of making an ordered mesoporous or mesostructured material according to any one of claims 15 to 27, **characterized in that** the method is performed at a temperature lying between 20°C and 90°C and in a particularly preferred manner between 20°C and 35°C.

29. A method of making an ordered mesoporous or mesostructured material according to any one of claims 15 to 28, **characterized in that** the step (3) of adding the mineral precursor is followed by a stage of maturing whose duration is preferably of the order of several hours.

30. A method of making an ordered mesoporous or mcsostructured material according to any one of claims 15 to 29, **characterized in that** the step (4) of eliminating the texturing agent is effected by thermal treatment or by entrainment in a solvent.

31. A method of making an ordered mesoporous or mesostructured material according to any one of claims 15 to 30, **characterized in that** the solid mesostructure obtained is further subjected to thermal treatment, especially calcination.

32. A method of making an ordered mesoporous or mesostructured material according to claims 31, **characterized in that** the thermal treatment effects modification of the chemical structure of the bonding mineral phase.

33. A method of making an ordered mesoporous or mesostructured material according to any one of claims 15 to 32, **characterized in that** the material resulting from step (4) and from a possible thermal treatment step is further subjected to a partial chemical attack of the mineral phase.

34. An ordered mesoporous or mesostructured material comprising a texturing agent within its porous parts, adapted to be obtained as a result of step (3) of a method according to any one of claims of 15 to 33.
